# EUROPÄISCHE PATENTSCHRIFT

(11) **EP 4 345 400 B1**
(45) Veröffentlichungstag und Bekanntmachung des Hinweises auf die Patenterteilung: **24.12.2025**
(21) Anmeldenummer: 22198964.3
(22) Anmeldetag: 30.09.2022
(51) Int. Cl.: F24S 25/50, H02S 20/00, H02S 20/10

(54) **TRÄGERSYSTEM ZUM AUFBAU EINER PHOTOVOLTAIK-FREILANDANLAGE, PHOTOVOLTAIK FREILANDANLAGE SOWIE VERFAHREN ZUM AUFBAU EINER PHOTOVOLTAIK FREILANDANLAGE**
CARRIER SYSTEM FOR CONSTRUCTING A PHOTOVOLTAIC OUTDOOR SYSTEM, PHOTOVOLTAIC OUTDOOR SYSTEM AND METHOD FOR CONSTRUCTING A PHOTOVOLTAIC OUTDOOR SYSTEM
SYSTÈME DE SUPPORT POUR CONSTRUIRE UNE INSTALLATION PHOTOVOLTAÏQUE À TERRE LIBRE, INSTALLATION PHOTOVOLTAÏQUE À TERRE LIBRE ET PROCÉDÉ DE CONSTRUCTION D'UNE INSTALLATION PHOTOVOLTAÏQUE À TERRE LIBRE

(43) Veröffentlichungstag der Anmeldung: 03.04.2024
(73) Patentinhaber: EBEG GmbH, 5301 Eugendorf (AT)
(72) Erfinder: Erwin, Roth, 5231 Schalchen (AT); Egger, Robert, 5301 Eugendorf (AT)
(74) Vertreter: Meissner Bolte Partnerschaft mbB

(56) Entgegenhaltungen:
- WO-A1-2006/032077
- WO-A1-2022/029107
- CN-A- 106 788 148
- KR-B1- 101 004 108
- US-A- 4 832 001
- US-A1- 2010 077 592
- US-B2- 8 704 082

## Beschreibung

Die vorliegende Erfindung betrifft allgemein Photovoltaik-Freilandanlagen insbesondere auf landwirtschaftlichen Flächen, welche eine umweltverträgliche Möglichkeit der Doppelnutzung von landwirtschaftlichen Flächen zur Lebensmittel- und Energieerzeugung ermöglichen.

Im Einzelnen betrifft die vorliegende Erfindung ein neuartiges Trägersystem zum Aufbau einer solchen Photovoltaik-Freilandanlage.

Aus dem Stand der Technik ist es bekannt, Photovoltaik-Module oder Photovoltaik-Paneele für Photovoltaik-Freilandanlagen aluminiumgerahmt auf Aluminium-Trägersysteme (zum Beispiel im 30°-Winkel) anzubringen und aufzubauen. Hierzu werden bislang erhebliche Aufbauzeiten benötigt, da eine Vielzahl an Aluminium-Lotschnitten und Verschraubungen erforderlich sind. Daher sind derartige Photovoltaik-Freilandanlagen relativ kostenintensiv und zeitaufwendig, was insbesondere den Aufbau der Photovoltaik-Freilandanlagen betrifft. Weiterhin ist die Herstellung von Aluminium sehr energieaufwendig, was die Gesamt-Energiebilanz von solchen herkömmlichen Photovoltaik-Freilandanlagen, neben Klimabilanz und der Rentabilität, negativ beeinflusst.

Darüber hinaus sind zum Erreichen der Klimaschutzziele und zum verstärkten Ausbau der Photovoltaik neben den Dachflächen auch größere Solarparks auf landwirtschaftlichen Flächen erforderlich. Hierbei gerät die Energieerzeugung jedoch in Konflikt mit der Nutzung dieser Flächen zur Erzeugung von Nahrungsmitteln sowie mit dem Natur- und Landschaftsschutz.

Eine Lösung dieser Konflikte können so genannte "bifaziale" Module bieten. Bifaziale Photovoltaik-Module oder Photovoltaik-Paneele können auch aus Licht, das von der Rückseite auf die Solarzellen der bifazialen Photovoltaik-Module oder Photovoltaik-Paneele fällt, elektrische Energie erzeugen. Ein bifaziales Photovoltaik-Modul oder Photovoltaik-Paneel ist also dazu in der Lage, das Licht, das an den Vorderseiten der bifazialen Solarzellen vorbei zunächst ungenutzt zwischen den einzelnen Solarzellen hindurchfällt, zu nutzen, wenn dieses Licht auf die Rückseiten der bifazialen Solarzellen reflektiert wird.

In diesem Zusammenhang ist es bekannt, dass die Photovoltaik-Freilandanlagen senkrecht aufgebaut werden, und dass zwischen den Modulreihen ausreichend Platz für eine landwirtschaftliche Bearbeitung der Flächen gelassen wird. Ein solcher Aufbau macht insbesondere die landwirtschaftliche Weiternutzung der für die Photovoltaik-Freilandanlage notwendige Fläche als Agrarfläche möglich.

Aus dem Dokument WO 2022/029107 A1 ist ein Trägersystem zum Aufbau einer Photovoltaik-Freianlage gemäß dem Oberbegriff des Anspruchs 1 bekannt.

In der Fachwelt besteht jedoch ein Bedarf nach einem Trägersystem zum kostengünstigen und einfachen Aufbau von solchen Photovoltaik-Freilandanlagen, die die genannten umweltschonenden und wirtschaftlichen Aspekte berücksichtigen. Insbesondere soll dabei die vertiefte Nutzung von Freiflächen ermöglicht werden.

Ausgehend von dieser Problemstellung liegt somit der vorliegenden Erfindung die Aufgabe zu Grunde, ein optimiertes Trägersystem zum Aufbau von Photovoltaik-Freilandanlagen bereitzustellen, das sowohl kostengünstig als auch einfach und schnell sowie vielseitig an vielfältigen Orten aufgebaut werden kann.

Des Weiteren ist eine der Erfindung zu Grunde liegende Aufgabe darin zu sehen, eine entsprechende Photovoltaik-Freilandanlage anzugeben, welche umweltverträgliche Möglichkeiten der Doppelnutzung von landwirtschaftlichen Flächen zur Lebensmittelerzeugung und zur Energieerzeugung ermöglicht.

Eine weitere der vorliegenden Erfindung zu Grunde liegende Aufgabe ist darin zu sehen, ein Verfahren zum Aufbau einer solchen Photovoltaik-Freilandanlage anzugeben.

Im Hinblick auf das Trägersystem wird die der Erfindung zu Grunde liegende Aufgabe durch den Gegenstand des unabhängigen Patentanspruchs 1 gelöst, wobei vorteilhafte Weiterbildungen des erfindungsgemäßen Trägersystems in den abhängigen Patentansprüchen 2 bis 10 angegeben sind.

Im Hinblick auf die Photovoltaik-Freilandanlage wird die der Erfindung zu Grunde liegende Aufgabe durch den Gegenstand des nebengeordneten Patentanspruchs 11 gelöst, wobei eine vorteilhafte Weiterbildung der erfindungsgemäßen Photovoltaik-Freilandanlage im abhängigen Patentanspruch 12 angegeben ist.

Schließlich wird die der Erfindung zu Grunde liegende Aufgabe im Hinblick auf das Montageverfahren durch den Gegenstand des nebengeordneten Patentanspruchs 13 gelöst.

Demgemäß betrifft die Erfindung insbesondere ein Trägersystem zum Aufbau einer Photovoltaik-Freilandanlage, welche mindestens ein vertikal oder zumindest im Wesentlichen vertikal ausgerichtetes Photovoltaik-Modul oder Photovoltaik-Paneel und vorzugsweise eine Vielzahl von vertikal oder zumindest im Wesentlichen vertikal ausgerichtete Photovoltaik-Module oder Photovoltaik-Paneele aufweist.

Das erfindungsgemäße Trägersystem zeichnet sich insbesondere dadurch aus, dass dieses mindestens ein erstes, oberes seilförmiges Spannelement und ein hiervor vertikal beabstandetes zweites, unteres seilförmiges Spannelement sowie eine erste Halterungsvorrichtung und eine hiervon beabstandete zweite Halterungsvorrichtung aufweist. Dabei ist vorgesehen, dass ein erster Endbereich des seilförmigen Spannelements mit der ersten Halterungsvorrichtung verbunden oder verbindbar ist, wobei ein dem ersten Endbereich gegenüberliegender zweiter Endbereich des seilförmigen Spannelements mit der zweiten Halterungsvorrichtung verbunden oder verbindbar ist.

Erfindungsgemäß ist vorgesehen, dass das erste und zweite seilförmige Spannelement jeweils als Führungssystem ausgeführt ist, um mindestens ein dem mindestens einem Photovoltaik-Modul oder Photovoltaik-Paneel zugeordnetes Führungselement entlang des seilförmigen Spannelements zu führen.

Auf diese Weise ist es möglich, dass das mindestens eine Photovoltaik-Modul oder Photovoltaik-Paneel entlang der Längsausrichtung des seilförmigen Spannelements geeignet positioniert werden kann.

Gemäß bevorzugten Realisierungen des erfindungsgemäßen Trägersystems ist vorgesehen, dass das mindestens eine Führungselement des Photovoltaik-Moduls oder Photovoltaik-Paneels als Hülse oder Öse bzw. als ein hülsenförmiger oder ösenförmiger Körper ausgebildet ist. Dieses Führungselement ist vorzugsweise an einem oberen oder unteren Seitenkantenbereich des Photovoltaik-Moduls oder Photovoltaik-Paneels angeordnet. Insbesondere ist dabei vorgesehen, dass durch das insbesondere als Hülse oder Öse ausgeführte Führungselement das seilförmige Spannelement des Trägersystems führbar ist.

Alternativ oder zusätzlich hierzu ist es denkbar, dass das mindestens eine Führungselement des Photovoltaik-Moduls oder Photovoltaik-Paneels als eine Art "Führungswagen" ausgebildet ist, der vorzugsweise an einem oberen oder unteren Seitenkantenbereich des Photovoltaik-Moduls oder Photovoltaik-Paneels angeordnet ist. Dieses als eine Art "Führungswagen" ausgeführte Führungselement ist insbesondere ausgebildet, auf oder an dem seilförmigen Spannelement zu laufen.

Dabei bietet es sich an, dass das mindestens eine dem Photovoltaik-Modul oder dem Photovoltaik-Paneel zugeordnete Führungselement derart bedarfsweise und insbesondere lösbar an dem seilförmigen Spannelement fixierbar ist, dass eine Relativbewegung zwischen dem Führungselement mit dem zugehörigen Photovoltaik-Modul oder Photovoltaik-Paneel und dem seilförmigen Spannelement unterbrochen ist.

Zur Realisierung dieser Ausführungsvariante ist gemäß einem Aspekt der Erfindung vorgesehen, dass mindestens ein Fixierelement, insbesondere in Gestalt einer Schraube, insbesondere Klemmschraube oder Feststellschraube, vorgesehen ist, um bedarfsweise das Führungselement an dem seilförmigen Spannelement zu fixieren. Selbstverständlich kommen aber auch andere Ausführungsformen für das Fixierelement in Frage.

Um eine möglichst optimale vertikale Ausrichtung des mindestens einen Photovoltaik-Moduls oder Photovoltaik-Paneels zu gewährleisten, ist gemäß der vorliegenden Erfindung vorgesehen, dass das Trägersystem ein erstes oberes seilförmiges Spannelement und ein hiervon vertikal beabstandetes zweites unteres seilförmiges Spannelement aufweist. Dabei sollte das erste und zweite seilförmige Spannelement jeweils als Führungssystem zum Führen von mindestens einem dem mindestens einen Photovoltaik-Modul oder Photovoltaik-Paneel zugeordneten Führungselement ausgebildet sein. Selbstverständlich ist es auch denkbar, zusätzlich zu dem zweiten seilförmigen Spannelement noch ein weiteres, drittes seilförmiges Spannelement vorzusehen.

Im Hinblick auf die erste und zweite Halterungsvorrichtung des erfindungsgemäßen Trägersystems ist vorgesehen, dass die erste bzw. zweite Halterungsvorrichtung jeweils eine Stütze aufweist, welche gegenüber der Vertikalen um mindestens 5°, vorzugsweise um mindestens 10° und noch bevorzugter um etwa 15° bis 30° geneigt verläuft. In diesem Zusammenhang sollte die Stütze der ersten Halterungsvorrichtung von der zweiten Halterungsvorrichtung weg geneigt verlaufen, und die Stütze der zweiten Halterungsvorrichtung von der ersten Halterungsvorrichtung weg geneigt verlaufen.

In diesem Zusammenhang sollte dabei das mindestens eine erste oder zweite seilförmige Spannelement zumindest bereichsweise zwischen der Stütze der ersten und zweiten Halterungsvorrichtung verlaufen.

Zur Befestigung der ersten Halterungsvorrichtung im Untergrund (Erdreich) ist gemäß einer bevorzugten Realisierung des erfindungsgemäßen Trägersystems vorgesehen, dass die erste Halterungsvorrichtung einen insbesondere als Trägerplatte ausgeführten Träger aufweist, mit dem ein unterer Endbereich der Stütze der ersten Halterungsvorrichtung insbesondere über ein Winkelstück oder Gelenk verbunden ist. Das Winkelstück oder Gelenk dient dabei dazu, den Neigungswinkel der Stütze der ersten Halterungsvorrichtung einzustellen.

Alternativ oder zusätzlich hierzu sollte auch die zweite Halterungsvorrichtung einen insbesondere als Trägerplatte ausgeführten Träger aufweisen, mit dem ein unterer Endbereich der Stütze der zweiten Halterungsvorrichtung insbesondere über ein Winkelstück oder Gelenk verbunden ist.

Gemäß Realisierungen des erfindungsgemäßen Trägersystems bietet es sich an, dass die erste Halterungsvorrichtung mindestens einen Bodenverankerungskörper insbesondere in Gestalt eines Schraubkörpers aufweist, um die erste Halterungsvorrichtung in dem Untergrund (Erdreich) zu verankern.

Alternativ oder zusätzlich hierzu sollte die zweite Halterungsvorrichtung ebenfalls einen entsprechenden Bodenverankerungskörper insbesondere in Gestalt eines Schraubkörpers aufweisen zum Verankern der zweiten Halterungsvorrichtung in dem Untergrund.

Der Bodenverankerungskörper dient insbesondere als Anbindung des insbesondere als Trägerplatte ausgeführten Trägers der entsprechenden Halterungsvorrichtung in dem Untergrund/Boden, wobei im übertragenen Sinne dann der insbesondere als Trägerplatte ausgeführte Träger die Unterkonstruktion der entsprechenden Halterungsvorrichtung ausbildet. Der Bodenverankerungskörper ist bevorzugt austauschbar, so dass dieser auf Gegebenheiten der Umgebung angepasst werden kann. So sind beispielsweise unterschiedliche Bodenverankerungskörper zu verwenden, wenn der Boden aus Stein und/oder aus Sand ausgestaltet ist. In einer bevorzugten Ausführungsform ist der Bodenverankerungskörper aus einem metallischen Werkstoff ausgestaltet. Insbesondere bietet es sich in diesem Zusammenhang an, dass der Bodenverankerungskörper das gleiche Material wie der insbesondere als Trägerplatte ausgeführte Träger der entsprechenden Halterungsvorrichtung aufweist. Dies führt vorteilhaft dazu, dass kein elektrolytisches Gefälle zwischen dem Träger und dem Bodenverankerungskörper auftritt und Korrosion bzw. Rost vermieden werden kann.

Gemäß denkbaren Realisierungen des Bodenverankerungskörpers weist dieser Fortsätze mit Sägezahnmuster auf. Die Fortsätze sind bevorzugt gleichmäßig am Bodenverankerungskörper verteilt, so dass dieser gleichmäßig in einem Boden eingebracht und dort verankert werden kann.

Die Aufstellung und Verankerung der entsprechenden Halterungsvorrichtung mit einem solchen Bodenverankerungskörper ist auf robuste Weise einfach und schnell durchzuführen und vermeidet fehlerhafte Konstruktionen.

Der Bodenverankerungskörper ist bevorzugt aus einem Bauteil in einem Stück gefertigt, vorzugsweise Metall, an deren Kanten spitze Dreiecke mit oder ohne Sägezahnmuster eingeschnitten und mit bis zu 90° gegen die Ebene der Trägerplatte der Halterungsvorrichtung anhand von Umformungswerkzeugen abgebogen werden. Daraus resultiert ein Erdspieß, der in einen Boden gerammt werden kann und dessen gezackte oder ungezackte Schnittkannte sich mit dem Wurzelwerk der natürlichen Bepflanzung verbinden kann und als Wiederhaken wirken.

Gemäß besonders bevorzugten Realisierungen des erfindungsgemäßen Trägersystems ist vorgesehen, dass die erste Halterungsvorrichtung eine dem mindestens einen seilförmigen Spannelement zugeordnete Umlenkung, insbesondere in Gestalt einer Umlenkrolle, aufweist, über welche das seilförmige Spannelement umgelenkt wird, und insbesondere in Richtung des Bodens umgelenkt wird.

In gleicher Weise bietet es sich an, dass auch die zweite Halterungsvorrichtung eine entsprechende dem mindestens einen seilförmigen Spannelement zugeordnete Umlenkung, insbesondere in Gestalt einer Umlenkrolle, aufweist, über welche das seilförmige Spannelement im Bereich der zweiten Halterungsvorrichtung in Richtung des Bodens umgelenkt wird.

Insbesondere in diesem Zusammenhang ist es von Vorteil, dass das mindestens eine seilförmige Spannelement eine zugeordnete Seilverankerung aufweist, über welche ein Endbereich des seilförmigen Spannelements am Untergrund fixierbar ist. In diesem Zusammenhang bietet es sich insbesondere an, dass die Seilverankerung vorzugsweise einen Bodenverankerungskörper insbesondere in Gestalt eines Schraubkörpers aufweist.

Gemäß Realisierungen dieser Ausführungsvariante ist vorgesehen, dass an den beiden gegenüberliegenden Endbereichen des seilförmigen Spannelements eine entsprechende Seilverankerung vorgesehen ist.

Alternativ oder zusätzlich hierzu ist es von Vorteil, dass dem seilförmigen Spannelement mindestens ein Spannschloss zugeordnet ist, um eine auf das seilförmige Spannelement wirkende Zugspannung einstellen bzw. nachstellen zu können.

Als Spannschloss bietet sich insbesondere eine Spannschraube bzw. eine Doppelmutter mit einem Rechts- und einem gegenläufigen Linksgewinde an, die zwei Zugstangen mit entsprechenden Außengewinden durch Zugspannung zusammenhält. Durch Drehung in die eine oder andere Richtung spannt dabei die Spannschraube bzw. lockert die Verbindung. Selbstverständlich kommen aber auch andere Ausführungsvarianten für einen entsprechenden Spanner zum Variieren/Einstellen der Zugspannung des mindestens einen seilförmigen Spannelements in Frage.

Insbesondere bei Photovoltaik-Freilandanlagen, bei denen der Abstand zwischen der ersten und zweiten Halterungsvorrichtung mehr als etwa 400 m beträgt, sollte vorzugsweise das Trägersystem mindestens eine zwischen der ersten und zweiten Halterungsvorrichtung angeordnete Stützvorrichtung aufweisen, die insbesondere eine zumindest im Wesentlichen vertikal verlaufende Stütze aufweist, die zum Abstützen des mindestens einen seilförmigen Spannelements dient, und die über einen Bodenverankerungskörper mit dem Untergrund verbunden ist.

Selbstverständlich ist es bei einer entsprechenden Ausdehnung der Photovoltaik-Freilandanlage notwendig, mehr als eine (zusätzliche) Stützvorrichtung zwischen der ersten und zweiten Halterungsvorrichtung vorzusehen.

Wie bereits eingangs ausgeführt, sollte zum Zwecke der möglichst effizienten Energieerzeugung das mindestens eine Photovoltaik-Modul oder Photovoltaik-Paneel als bifaziales Photovoltaik-Modul oder Photovoltaik-Paneel ausgeführt sein. Allerdings ist die vorliegende Erfindung nicht auf solche Ausführungsformen beschränkt. Vielmehr ist es auch denkbar, monofaziale Module einzusetzen.

Die erfindungsgemäße Photovoltaik-Freilandanlage zeichnet sich insbesondere dadurch aus, dass diese mindestens ein Trägersystem der zuvor genannten erfindungsgemäßen Art aufweist. Dabei ist das Trägersystem derart montiert, dass das mindestens eine Photovoltaik-Modul oder Photovoltaik-Paneel in einer Ost-West-Richtung zumindest im Wesentlichen senkrecht von dem mindestens einen seilförmigen Spannelement gehalten ist.

Insbesondere bietet es sich in diesem Zusammenhang an, dass die erfindungsgemäße Photovoltaik-Freilandanlage eine Vielzahl von zumindest im Wesentlichen parallel zueinander angeordnete Trägersysteme der zuvor genannten erfindungsgemäßen Art aufweist.

Das erfindungsgemäße Verfahren zum Aufbau einer Photovoltaik-Freilandanlage, insbesondere einer Photovoltaik-Freilandanlage der zuvor genannten erfindungsgemäßen Art, zeichnet sich insbesondere dadurch aus, dass das Verfahren die folgenden Verfahrensschritte aufweist:
▪ Verankerung der ersten und zweiten Halterungsvorrichtung im Untergrund;
▪ Spannen des mindestens einen ersten oder zweiten seilförmigen Spannelements zwischen der ersten und zweiten Halterungsvorrichtung.

Dabei ist insbesondere vorgesehen, dass die erste und zweite Halterungsvorrichtung derart relativ zueinander verankert werden, dass das dann zwischen den Halterungsvorrichtungen gespannte seilförmige Spannelement zumindest im Wesentlichen in einer Ost-West-Richtung verläuft.

Das erfindungsgemäße Verfahren zeichnet sich insbesondere dadurch aus, dass das Verfahren ferner die folgenden Verfahrensschritte aufweist:
▪ Einführen/Einfädeln des mindestens einen dem mindestens einen Photovoltaik-Modul oder Photovoltaik-Paneel zugeordneten Führungselements in das als Führungssystem dienende mindestens eine seilförmige Spannelement;
▪ Positionieren des mindestens einen Photovoltaik-Moduls oder Photovoltaik-Paneels entlang des seilförmigen Spannelements; und
▪ Fixieren des Führungselements des positionierten Photovoltaik-Moduls oder Photovoltaik-Paneels am seilförmigen Spannelement.

Nachfolgend wird unter Bezugnahme auf die beiliegenden Zeichnungen die Erfindung anhand eines exemplarischen Ausführungsbeispiels näher beschrieben.

Es zeigen:
- FIG. 1: schematisch und in einer isometrischen Ansicht eine exemplarische Ausführungsform der erfindungsgemäßen Photovoltaik-Freilandanlage mit einer Vielzahl von parallel zueinander angeordneten Trägersystemen mit entsprechenden Photovoltaik-Modulen;
- FIG. 2: schematisch und in einer Seitenansicht ein Trägersystem der exemplarischen Ausführungsform der erfindungsgemäßen Photovoltaik-Freilandanlage gemäß FIG. 1;
- FIG. 3A bis C: schematisch und jeweils in einer isometrischen Ansicht verschiedene Ausführungsformen von den dem Photovoltaik-Modul des Trägersystems gemäß FIG. 2 zugeordneten Führungselementen;
- FIG. 4: schematisch eine exemplarische Ausführungsform der Unterkonstruktion der Halterungsvorrichtungen des Trägersystems gemäß FIG. 2; und
- FIG. 5: schematisch eine exemplarische Ausführungsform der Unterkonstruktion zum Verankern des seilförmigen Spannelements des Trägersystems gemäß FIG. 2.

Angesichts der maßgeblich vom Menschen verursachten globalen Erwärmung ist eine Dekarbonisierung der Energiewirtschaft durch Beendigung der Nutzung von fossilen Energieträgern von hoher Bedeutung. Ebenso stellen die Endlichkeit der fossilen Energieträger wie Erdöl, Kohle und Erdgas sowie die Risiken einer alternativen Kernenergie wichtige Gründe für die Energiewende dar. Die Lösung des globalen Energieproblems gilt als zentrale Herausforderung des 21 Jahrhunderts.

Wesentliche Elemente der Energiewende sind der Ausbau der erneuerbaren Energien. Zu den erneuerbaren Energien zählen beispielsweise Bioenergie, Erdwärme, Wasserkraft, Meeresenergie, Windenergie und insbesondere Sonnenenergie (Solarthermie, Photovoltaik).

Unter "Photovoltaik" versteht man die direkte Umwandlung von Lichtenergie, meist aus Sonnenlicht, in elektrische Energie mittels Solarzellen. Mit großem Abstand wichtigstes Anwendungsgebiet ist heute die netzgebundene Stromerzeugung primär auf Dachflächen und als Freiflächenanlagen, um konventionelle Kraftwerke zu ersetzen.

Bei den Freiflächenanlagen wird zwischen Festaufständerung und Trackingsystemen unterschieden. Bei der Festaufständerung wird abhängig vom Untergrund ein Stahl- oder Aluminiumgestell durch Rammung im Boden verankert oder auf Betonblöcken befestigt, wobei der Winkel der Module nach der Montage nicht mehr verändert wird.

Trackingsysteme folgen dem Sonnenverlauf, um immer eine möglichst optimale Ausrichtung der Module zu gewährleisten. Trackingsysteme weisen jedoch im Vergleich zu Systemen mit einer Festaufständerung wesentlich höhere Kosten auf. Diese setzen sich insbesondere durch hohe Investitionskosten, hohe Betriebskosten für die Wartung sowie die benötigte Energie für die Nachführung der einzelnen Photovoltaik-Module zusammen.

Festaufständerungen sind im Stand der Technik hinlänglich bekannt. Beispielsweise offenbart die Druckschrift DE 10 2018 114 621 A1 ein Trägersystem zur Anordnung einer Photovoltaik-Einheit, welche mindestens ein, bevorzugt eine Vielzahl von Photovoltaik-Modulen aufweist. Das Trägersystem umfasst vier Bodenstützen, welche anhand von quer und längs ausgerichteten Trägern miteinander verbunden sind. Die Träger sind dazu eingerichtet, die Photovoltaik-Module aufzunehmen. Dabei ist das Trägersystem derartig konstruiert, dass die Photovoltaik-Module einerseits vom Boden beabstandet montiert werden und andererseits jeweils einen Neigungswinkel aufweisen.

Insbesondere das Aufweisen von Quer- und Längsträgern geht mit einer Vielzahl von Nachteilen einher. Die für eine Photovoltaik-Einheit gesamten beanspruchten Mengen an Material der Quer- und Längsträger sind insbesondere für die Montage, für den Transport und für die Herstellung von großem Nachteil. Die Längssowie Querträger können zudem nur eine begrenzte Länge erreichen, da sie anderenfalls durch ihr Eigengewicht einem großen Biegemoment unterliegen, welche zu einer erwünschten Materialverformung führt.

Durch die Verwendung eines Aluminium-Trägersystems ist die Gesamt-Energiebilanz der zuvor beschriebenen Photovoltaik-Anlage, neben Klimabilanz und der Rentabilität, negativ beeinflusst.

Die erfindungsgemäße Photovoltaik-Freilandanlage 1, welche nachfolgend anhand der in den Zeichnungen gezeigten exemplarischen Ausführungsform näher beschrieben wird, zeichnet sich insbesondere dadurch aus, dass die Anlage 1 sowohl kostengünstig als auch einfach und schnell sowie vielseitig an vielfältigen Orten aufgebaut werden kann.

Insbesondere zeichnet sich die erfindungsgemäße Photovoltaik-Freilandanlage 1 dadurch aus, dass die Anlage 1 eine Vielzahl von senkrecht aufgebauten Modulreihen 2 mit einer Vielzahl von Photovoltaik-Modulen 4 oder Photovoltaik-Paneele aufweist, wobei zwischen den einzelnen Modulreihen 2 ausreichend Platz für eine landwirtschaftliche Bearbeitung der Flächen gelassen wird. Ein solcher Aufbau ermöglicht nach wie vor die landwirtschaftliche Weiternutzung der Agrarfläche.

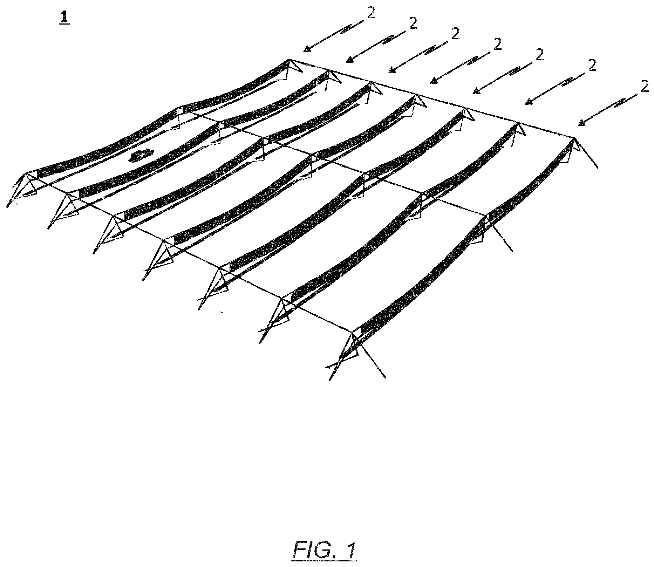

Dies ist beispielsweise in der isometrischen und schematischen Ansicht einer exemplarischen Ausführungsform der erfindungsgemäßen Photovoltaik-Freilandanlage 1 in FIG. 1 gezeigt. Angedeutet in FIG. 1 ist insbesondere ein landwirtschaftliches Fahrzeug (Traktor) zwischen einzelnen Modulreihen 2 der Photovoltaik-Freilandanlage 1.

Im Einzelnen umfasst die Freiland-Photovoltaikanlage 1 eine Vielzahl von parallel zueinander angeordneten Modulreihen 2, die jeweils durch ein Trägersystem 3 mit entsprechenden Photovoltaik-Modulen 4 oder Photovoltaik-Paneelen gebildet werden.

Die einzelnen Trägersysteme 3 sind derart montiert, dass die zugehörigen Photovoltaik-Module 4 oder Photovoltaik-Paneele vorzugsweise in einer Ost-West-Richtung zumindest im Wesentlichen senkrecht von mindestens einem seilförmigen Spannelement 5 des entsprechenden Trägersystems 3 gehalten werden.

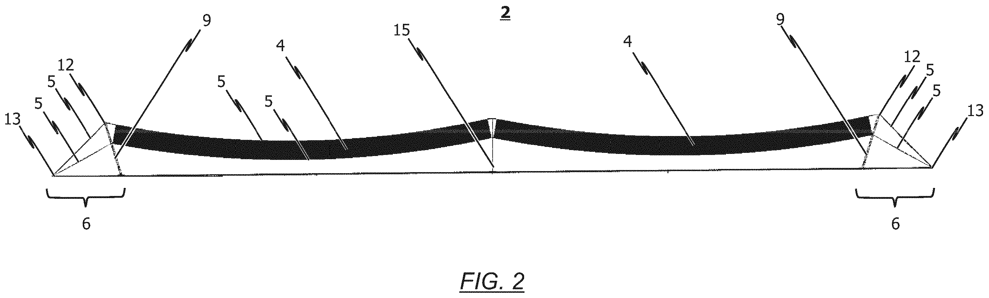

In diesem Zusammenhang sei auch auf die Darstellung in FIG. 2 verwiesen, die in einer Seitenansicht ein Trägersystem 3 der Freiland-Photovoltaikanlage 1 gemäß FIG. 1 zeigt, d.h. eine Modulreihe 2 der Freiland-Photovoltaikanlage 1.

Als Photovoltaik-Modul 4 oder Photovoltaik-Paneel kommt beispielsweise ein selbsttragendes Photovoltaik-Modul 4 oder Photovoltaik-Paneel in Frage, welches gerahmt ist.

Ein derartiges Photovoltaik-Modul 4 bzw. Photovoltaik-Paneel besteht bevorzugt aus siliziumbasierten Solarzellen; es können jedoch auch andere Materialien zum Einsatz kommen, die auf einen Metallrahmen (bevorzugt Aluminiumrahmen) montiert und bevorzugt von einer Glasplatte abgedeckt sind. Die Solarzellen werden mechanisch durch das Glas vor Umwelteinschlüssen geschützt, zum Beispiel vor Hagel oder PCO-Korrosion. Der Aluminiumrahmen dient insbesondere dem Schutz der Glasscheibe bei Transport, Handhabung und Montage, der Befestigung und für die Versteifung des Verbunds.

Die bevorzugten Photovoltaik-Module 4 bzw. Photovoltaik-Paneele entsprechen einer Bauartzertifizierung von IEC 61215:2005 und/oder IEC 61646:2008. Die Zertifizierung wird bevorzugt durch unabhängige technische Prüforganisationen (wie beispielsweise TÜV Rheinland) durchgeführt.

Dennoch ist es aber auch denkbar, dass als Photovoltaik-Modul 4 bzw. Photovoltaik-Paneel rahmenlose Module bzw. Paneele zum Einsatz kommen. Derartige rahmenlose Module bzw. Paneele sind meist als Glas-Glas-Module/Paneele ausgeführt und werden in der Regel auf Trägerschienen einer Unterkonstruktion mit speziellen Klemmen befestigt.

Rahmenlose Glas-/Glas-Module bzw. Paneele umfassen bevorzugt einen leicht modifizierten Rahmen und erzeugen beidseitig Strom. Im Stand der Technik sind derartige Photovoltaik-Module 4 beispielsweise der Firma "TRINA SOLAR" unter der Produktbezeichnung "VERTEX" bekannt. Die VERTEX-Reihe besteht aus dem bifazialen Glas-Glas-Modul "DUOMAX V" und dem Glas-Folien-Modul "TALLMAX V".

Wie es insbesondere der Seitenansicht in FIG. 2 entnommen werden kann, weist die exemplarische Ausführungsform des erfindungsgemäßen Trägersystems 3 zum Aufbau einer Photovoltaik-Freilandanlage 1, wie beispielsweise der schematisch und in einer isometrischen Ansicht in FIG. 1 gezeigten Photovoltaik-Freilandanlage 1, eine erste Halterungsvorrichtung 6 und eine hiervon beabstandete zweite Halterungsvorrichtung 6 auf.

Des Weiteren ist zumindest bereichsweise zwischen der ersten und zweiten Halterungsvorrichtung 6 ein erstes (oberes) seilförmiges Spannelement 5 und ein zweites (unteres) seilförmiges Spannelement 5 gespannt. Ein erster Endbereich der beiden seilförmigen Spannelemente 5 ist mit der ersten Halterungsvorrichtung 6 verbunden und ein dem ersten Endbereich gegenüberliegender zweiter Endbereich der beiden seilförmigen Spannelemente 5 ist mit der zweiten Halterungsvorrichtung 6 verbunden.

Die seilförmigen Spannelemente 5 dienen zum Halten der Photovoltaik-Module 4 oder Photovoltaik-Paneele derart, dass diese vertikal oder zumindest im Wesentlichen vertikal ausgerichtet sind.

Darüber hinaus dienen die seilförmigen Spannelemente 5 als Führungssysteme zum Führen der Photovoltaik-Module 4 oder Photovoltaik-Paneele, welche hierzu entsprechend zugeordnete Führungselemente 7 aufweisen.

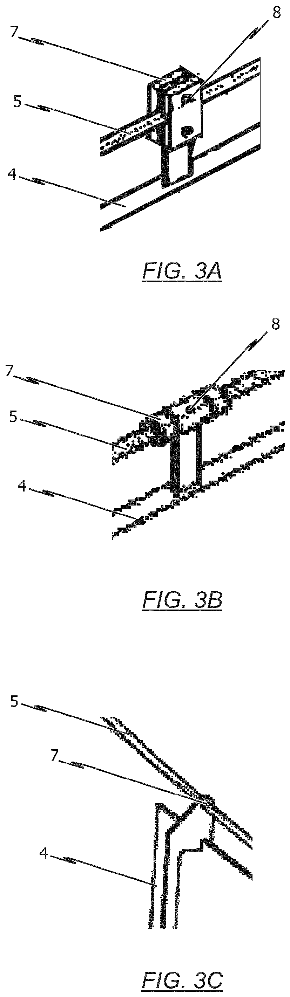

Unterschiedliche Ausgestaltungen der geeigneten Führungselemente 7 der Photovoltaik-Module 4 oder Photovoltaik-Paneele sind in FIG. 3A bis FIG. 3C gezeigt.

So ist es beispielsweise denkbar, dass das mindestens eine Führungselemente 7 des Photovoltaik-Moduls 4 oder Photovoltaik-Paneels als Hülse oder Öse ausgebildet ist, die vorzugsweise an einem oberen oder unteren Seitenkantenbereich des Photovoltaik-Moduls 4 oder Photovoltaik-Paneels angeordnet ist, und durch die das seilförmige Spannelement 5 führbar ist (vgl. FIG. 3B und FIG. 3C).

Andererseits ist es aber auch denkbar, dass das mindestens eine Führungselement des Photovoltaik-Moduls 4 oder Photovoltaik-Paneels als eine Art "Führungswagen" ausgebildet ist, der vorzugsweise an einem oberen oder unteren Seitenkantenbereich des Photovoltaik-Moduls 4 oder Photovoltaik-Paneels angeordnet und ausgebildet ist, auf oder an dem seilförmigen Spannelement 5 zu laufen (vgl. FIG. 3A).

Das dem Photovoltaik-Moduls 4 oder dem Photovoltaik-Paneel entsprechend zugeordnete Führungselement 7 ist insbesondere derart bedarfsweise und insbesondere lösbar an dem seilförmigen Spannelement 5 fixierbar, dass eine Relativbewegung zwischen dem Führungselement 7 mit dem zugehörigen Photovoltaik-Moduls 4 oder Photovoltaik-Paneel und dem seilförmigen Spannelement 5 unterbrochen wird.

Hierzu ist es beispielsweise denkbar, dass mindestens ein Fixierelement 8, insbesondere in Gestalt einer Schraube, insbesondere Klemmschraube oder Feststellschraube, vorgesehen ist, um bedarfsweise das Führungselement 7 an dem seilförmigen Spannelement 5 zu fixieren.

Zurückkommend auf die Darstellung in FIG. 2 sei angemerkt, dass die erste Halterungsvorrichtung 6 eine Stütze 9 aufweist, welche gegenüber der Vertikalen um mindestens 5°, vorzugsweise um mindestens 10° und noch bevorzugter um etwa 15° bis 30° von der zweiten Halterungsvorrichtung 6 weg geneigt verläuft.

In gleicher Weise weist die zweite Halterungsvorrichtung 6 eine Stütze 9 auf, welche gegenüber der Vertikalen um mindestens 5°, vorzugsweise um mindestens 10° und noch bevorzugter um etwa 15° bis 30° von der ersten Halterungsvorrichtung 6 weg geneigt verläuft.

Dabei ist vorgesehen, dass die beiden seilförmigen Spannelemente 5, d.h. das obere und untere seilförmige Spannelement 5, zumindest bereichsweise zwischen der Stütze 9 der ersten und zweiten Halterungsvorrichtung 6 verlaufen.

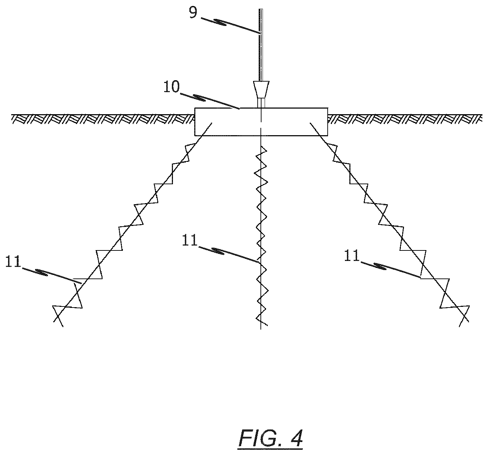

Wie es insbesondere der Darstellung in FIG. 4 entnommen werden kann, weist die erste Halterungsvorrichtung 6 eine Unterkonstruktion mit einem insbesondere als Trägerplatte ausgeführten Träger 10 auf, mit welchem ein unterer Endbereich der entsprechenden Stütze 9, d.h. der Stütze 9 der ersten Halterungsvorrichtung 6, insbesondere über ein (in FIG. 4 nicht gezeigtes) Winkelstück oder Gelenk verbunden ist.

Die Unterkonstruktion der zweiten Halterungsvorrichtung 6 ist vorzugsweise in gleicher Weise ausgeführt.

Der Darstellung in FIG. 4 ist ferner zu entnehmen, dass die Unterkonstruktion der Halterungsvorrichtung 6 mindestens einen Bodenverankerungskörper 11 insbesondere in Gestalt eines Schraubkörpers aufweist, um die Halterungsvorrichtung 6 in einem Untergrund (lösbar) zu verankern.

In FIG. 2 ist angedeutet, dass die erste sowie die zweite Halterungsvorrichtung 6 jeweils eine den seilförmigen Spannelementen 5 zugeordnete Umlenkung 12 aufweist, über welche das entsprechende seilförmige Spannelement 5 in Richtung des Untergrunds umgelenkt wird. Die Umlenkung 12 kann beispielsweise in Gestalt einer Umlenkrolle ausgeführt sein.

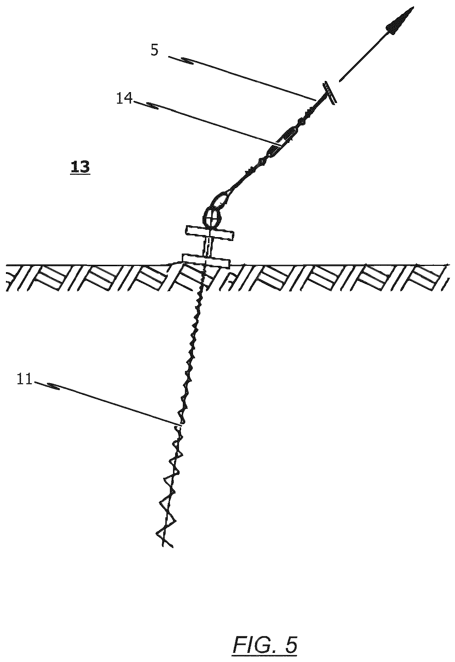

Wie es insbesondere der schematischen Darstellung in FIG. 5 entnommen werden kann, ist jedem seilförmigen Spannelement 5 eine Seilverankerung 13 zugeordnet, über welche ein Endbereich des seilförmigen Spannelements 5 am Untergrund fixierbar ist. Hierzu weist die Seilverankerung 13 vorzugsweise einen Bodenverankerungskörper 11 insbesondere in Gestalt eines Schraubkörpers auf.

Ebenfalls ist der Darstellung in FIG. 5 zu entnehmen, dass den seilförmigen Spannelementen 5 jeweils mindestens ein Spannschloss 14 zugeordnet ist, um eine auf das seilförmige Spannelement 5 wirkende Zugspannung einstellen zu können.

Der Darstellung in FIG. 2 ist zu entnehmen, dass das Trägersystem 3 ferner zumindest eine zwischen der ersten und zweiten Halterungsvorrichtung 6 angeordnete Stützvorrichtung mit einer im Wesentlichen zumindest vertikal verlaufenden Stütze 15 aufweist, die über einen Bodenverankerungskörper mit dem Untergrund verbunden ist.

### Bezugszeichenliste

- 1: Photovoltaik-Freilandanlage
- 2: Modulreihe der Photovoltaik-Freilandanlage
- 3: Trägersystem zum Ausbilden der Modulreihe der Photovoltaik-Freilandanlage
- 4: Photovoltaik-Moduls/Photovoltaik-Paneel
- 5: seilförmiges Spannelement
- 6: erste und zweite Halterungsvorrichtung des Trägersystems
- 7: Führungselement des Photovoltaik-Moduls/Photovoltaik-Paneels
- 8: Fixierelement des Führungselements
- 9: Stütze der Halterungsvorrichtung
- 10: Träger der Unterkonstruktion der Halterungsvorrichtung
- 11: Bodenverankerungskörper der Unterkonstruktion der Halterungsvorrichtung
- 12: Umlenkung der Halterungsvorrichtung
- 13: Seilverankerung
- 14: Spannschloss
- 15: vertikale Stütze des Trägersystems

## Patentansprüche

1. Trägersystem (3) zum Aufbau einer Photovoltaik-Freilandanlage (1), welche mindestens ein vertikal oder zumindest im Wesentlichen vertikal ausgerichtetes Photovoltaik-Modul (4) oder Photovoltaik-Panel und vorzugsweise eine Vielzahl von vertikal oder zumindest im Wesentlichen vertikal ausgerichtete Photovoltaik-Module (4) oder Photovoltaik-Paneele aufweist, wobei das Trägersystem (3) Folgendes aufweist:
- ein erstes, oberes seilförmiges Spannelement (5) und ein hiervor vertikal beabstandetes zweites, unteres seilförmiges Spannelement (5);
- eine erste Halterungsvorrichtung (6) und eine hiervon beabstandete zweite Halterungsvorrichtung (6), wobei ein erster Endbereich der beiden seilförmigen Spannelemente (5) mit der ersten Halterungsvorrichtung (6) verbunden ist, und wobei ein dem ersten Endbereich gegenüberliegender zweiter Endbereich der beiden seilförmigen Spannelemente (5) mit der zweiten Halterungsvorrichtung (6) verbunden oder verbindbar ist;
wobei die erste und zweite seilförmigen Spannelemente (5) jeweils als Führungssystem zum Führen von mindestens einem dem mindestens einen Photovoltaik-Modul (4) oder Photovoltaik-Paneel zugeordneten Führungselement (7) ausgebildet sind,
**dadurch gekennzeichnet,**
**dass** die erste Halterungsvorrichtung (6) eine Stütze (9) aufweist, welche gegenüber der Vertikalen um mindestens 5°, vorzugsweise um mindestens 10° und noch bevorzugter um etwa 15° bis 30° von der zweiten Halterungsvorrichtung (6) weg geneigt verläuft, wobei die zweite Halterungsvorrichtung (6) eine Stütze (9) aufweist, welche gegenüber der Vertikalen um mindestens 5°, vorzugsweise um mindestens 10° und noch bevorzugter um etwa 15° bis 30° von der ersten Halterungsvorrichtung (6) weg geneigt verläuft, wobei die erste und zweite seilförmigen Spannelemente (5) zumindest bereichsweise zwischen der Stütze (9) der ersten und zweiten Halterungsvorrichtung (6) verlaufen.

2. Trägersystem (3) nach Anspruch 1,
wobei das mindestens eine Führungselement (7) des Photovoltaik-Moduls (4) oder Photovoltaik-Paneels als Hülse oder Öse ausgebildet ist, die vorzugsweise an einem oberen oder unteren Seitenkantenbereich des Photovoltaik-Moduls (4) oder Photovoltaik-Paneels angeordnet ist, und durch die eines der seilförmigen Spannelemente (5) führbar ist; und/oder
wobei das mindestens eine Führungselement (7) des Photovoltaik-Moduls (4) oder Photovoltaik-Paneels als Führungswagen ausgebildet ist, der vorzugsweise an einem oberen oder unteren Seitenkantenbereich des Photovoltaik-Moduls (4) oder Photovoltaik-Paneels angeordnet und ausgebildet ist, auf oder an einem der seilförmigen Spannelemente (5) zu laufen.

3. Trägersystem (3) nach Anspruch 1 oder 2,
wobei das mindestens eine dem Photovoltaik-Modul (4) oder dem Photovoltaik-Paneel zugeordnete Führungselement (7) derart bedarfsweise und insbesondere lösbar an dem seilförmigen Spannelement (5) fixierbar ist, dass eine Relativbewegung zwischen dem Führungselement (7) mit dem zugehörigen Photovoltaik-Modul (4) oder Photovoltaik-Paneel und dem seilförmigen Spannelement (5) unterbrochen ist.

4. Trägersystem (3) nach einem der Ansprüche 1 bis 3,
wobei mindestens ein Fixierelement (8), insbesondere in Gestalt einer Schraube, insbesondere Klemmschraube oder Feststellschraube, vorgesehen ist zum bedarfsweisen Fixieren des Führungselements (7) an dem seilförmigen Spannelement (5).

5. Trägersystem (3) nach einem der Ansprüche 1 bis 4,
wobei die erste Halterungsvorrichtung (6) einen insbesondere als Trägerplatte ausgeführten Träger (10) aufweist, mit dem ein unterer Endbereich der Stütze (9) der ersten Halterungsvorrichtung (6) insbesondere über ein Winkelstück oder Gelenk verbunden oder verbindbar ist; und/oder
wobei die zweite Halterungsvorrichtung (6) einen insbesondere als Trägerplatte ausgeführten Träger (10) aufweist, mit dem ein unterer Endbereich der Stütze (9) der zweiten Halterungsvorrichtung (6) insbesondere über ein Winkelstück oder Gelenk verbunden oder verbindbar ist; und/oder
wobei die erste Halterungsvorrichtung (6) mindestens einen Bodenverankerungskörper (11) insbesondere in Gestalt eines Schraubkörpers aufweist zum Verankern der ersten Halterungsvorrichtung (6) in einem Untergrund; und/oder
wobei die zweite Halterungsvorrichtung (6) mindestens einen Bodenverankerungskörper (11) insbesondere in Gestalt eines Schraubkörpers aufweist zum Verankern der zweiten Halterungsvorrichtung (6) in einem Untergrund.

6. Trägersystem (3) nach einem der Ansprüche 1 bis 5,
wobei die erste Halterungsvorrichtung (6) eine den seilförmigen Spannelementen (5) zugeordnete Umlenkung (12), insbesondere in Gestalt einer Umlenkrolle, aufweist, über welche das entsprechende seilförmige Spannelement (5) umgelenkt wird; und/oder
wobei die zweite Halterungsvorrichtung (6) eine den seilförmigen Spannelementen (5) zugeordnete Umlenkung (12), insbesondere in Gestalt einer Umlenkrolle, aufweist, über welche das entsprechende seilförmige Spannelement (5) umgelenkt wird.

7. Trägersystem (3) nach einem der Ansprüche 1 bis 6,
wobei jedes seilförmige Spannelement (5) eine Seilverankerung (13) aufweist, über welche ein Endbereich des seilförmigen Spannelements (5) am oder im Untergrund fixierbar ist, wobei die Seilverankerung (13) vorzugsweise einen Bodenverankerungskörper (11) insbesondere in Gestalt eines Schraubkörpers aufweist.

8. Trägersystem (3) nach einem der Ansprüche 1 bis 7,
wobei dem seilförmigen Spannelement (5) mindestens ein Spannschloss (14) zugeordnet ist zum Einstellen einer auf das seilförmige Spannelement (5) wirkenden Zugspannung.

9. Trägersystem (3) nach einem der Ansprüche 1 bis 8,
wobei das Trägersystem (3) mindestens eine zwischen der ersten und zweiten Halterungsvorrichtung (6) angeordnete Stützvorrichtung mit einer zumindest im Wesentlichen vertikal verlaufenden Stütze (15) aufweist, die über einen Bodenverankerungskörper (11) insbesondere in Gestalt eines Schraubkörpers mit dem Untergrund verbunden ist.

10. Trägersystem (3) nach einem der Ansprüche 1 bis 9,
wobei das mindestens eine Photovoltaik-Modul (4) oder Photovoltaik-Paneel als bifaziales Photovoltaik-Modul (4) oder Photovoltaik-Paneel ausgeführt ist.

11. Photovoltaik-Freilandanlage (1) mit mindestens einem Trägersystem (3) nach einem der Ansprüche 1 bis 10, wobei das Trägersystem (3) derart montiert ist, dass das mindestens eine Photovoltaik-Modul (4) oder Photovoltaik-Paneel in einer Ost-West-Richtung zumindest im Wesentlichen senkrecht von dem mindestens einen seilförmigen Spannelement (5) gehalten ist.

12. Photovoltaik-Freilandanlage (1) nach Anspruch 11,
wobei eine Vielzahl von zumindest im Wesentlichen parallel zueinander angeordnete Trägersysteme (3) vorgesehen ist.

13. Verfahren zum Aufbau einer Photovoltaik-Freilandanlage (1) nach Anspruch 11 oder 12, wobei das Verfahren die folgenden Verfahrensschritte aufweist:
- Verankerung der ersten und zweiten Halterungsvorrichtung (6) des Trägersystems (3) im Untergrund;
- Spannen der ersten und zweiten seilförmigen Spannelemente (5) zwischen der ersten und zweiten Halterungsvorrichtung (6) des Trägersystems (3),
wobei die erste und zweite Halterungsvorrichtung (6) derart relativ zueinander verankert werden, dass die dann zwischen den Halterungsvorrichtungen gespannte seilförmige Spannelemente (5) zumindest im Wesentlichen in einer Ost-West-Richtung verlaufen, und wobei das Verfahren ferner die folgenden Verfahrensschritte aufweist:
- Einführen des mindestens einen dem mindestens einen Photovoltaik-Modul (4) oder Photovoltaik-Paneel zugeordneten Führungselements (7) in die als Führungssystem dienende erste und zweite seilförmige Spannelemente (5);
- Positionieren des mindestens einen Photovoltaik-Moduls (4) oder Photovoltaik-Paneels entlang der seilförmigen Spannelemente (5); und
- Fixieren des Führungselements (7) des positionierten Photovoltaik-Moduls (4) oder Photovoltaik-Paneels an den seilförmigen Spannelemente (5).

## Claims

1. Support system (3) for the construction of a photovoltaic open space installation (1),
which has at least one photovoltaic module (4) or photovoltaic panel that is aligned vertically or at least substantially vertically, and preferably a plurality of photovoltaic modules (4) or photovoltaic panels that are aligned vertically or at least substantially vertically, wherein the support system (3) has the following:
- a first, upper rope-shaped tensioning element (5) and a second, lower rope-shaped tensioning element (5) spaced vertically apart from it;
- a first holding device (6) and a second holding device (6) spaced apart from it, wherein a first end region of the two rope-shaped tensioning elements (5) is connected to the first holding device (6), and wherein a second end region of the two rope-shaped tensioning elements (5) opposite the first end region is connected or connectable to the second holding device (6);
wherein the first and second rope-shaped tensioning elements (5) are each designed as a guide system for guiding at least one guide element (7) assigned to the at least one photovoltaic module (4) or photovoltaic panel,
**characterized in,**
**that** the first holding device (6) has a support (9) which is inclined away from the second holding device (6) by at least 5°, preferably by at least 10° and even more preferably by approximately 15° to 30° relative to the vertical, wherein the second holding device (6) has a support (9) which is inclined away from the vertical by at least 5°, preferably by at least 10° and even more preferably by about 15° to 30° away from the first holding device (6), wherein the first and second rope-shaped tensioning elements (5) extend at least in some areas between the support (9) of the first and second holding devices (6).

2. Support system (3) according to claim 1,
wherein the at least one guide element (7) of the photovoltaic module (4) or photovoltaic panel is designed as a sleeve or eyelet, which is preferably arranged at an upper or lower side edge region of the photovoltaic module (4) or photovoltaic panel and through which one of the rope-shaped tensioning elements (5) can be guided; and/or
wherein the at least one guide element (7) of the photovoltaic module (4) or photovoltaic panel is designed as a guide carriage which is preferably arranged at an upper or lower side edge region of the photovoltaic module (4) or photovoltaic panel and is designed to run on or at one of the rope-shaped tensioning elements (5).

3. Support system (3) according to claim 1 or 2,
wherein the at least one guide element (7) assigned to the photovoltaic module (4) or the photovoltaic panel is fixable to the rope-shaped tensioning element (5) as required and, in particular, in a detachable manner so that a relative movement between the guide element (7) with the associated photovoltaic module (4) or photovoltaic panel and the rope-shaped tensioning element (5) is interrupted.

4. Support system (3) according to one of claims 1 to 3,
wherein at least one fixing element (8), in particular in the form of a screw, in particular a clamping screw or locking screw, is provided for fixing the guide element (7) to the rope-shaped tensioning element (5) as required.

5. Support system (3) according to one of claims 1 to 4,
wherein the first holding device (6) has a carrier (10) designed in particular as a support plate, to which a lower end region of the support (9) of the first holding device (6) is connected or connectable, in particular via an angle piece or joint; and/or
wherein the second holding device (6) has a carrier (10), in particular in the form of a support plate, to which a lower end region of the support (9) of the second holding device (6) is connected or connectable, in particular via an angle piece or joint; and/or
wherein the first holding device (6) has at least one ground anchoring body (11), in particular in the form of a screw body, for anchoring the first holding device (6) in the ground; and/or
wherein the second holding device (6) has at least one ground anchoring body (11), in particular in the form of a screw body, for anchoring the second holding device (6) in the ground.

6. Support system (3) according to one of claims 1 to 5,
wherein the first holding device (6) has a deflection (12) assigned to the rope-shaped tensioning elements (5), in particular in the form of a deflection roller, over which the corresponding rope-shaped tensioning element (5) is deflected; and/or
wherein the second holding device (6) has a deflection (12) assigned to the rope-shaped tensioning elements (5), in particular in the form of a deflection roller, over which the corresponding rope-shaped tensioning element (5) is deflected.

7. Support system (3) according to one of claims 1 to 6,
wherein each rope-shaped tensioning element (5) has a rope anchorage (13) via which an end region of the rope-shaped tensioning element (5) can be fixed to or in the ground, wherein the rope anchorage (13) preferably has a ground anchoring body (11), in particular in the form of a screw body.

8. Support system (3) according to one of claims 1 to 7,
wherein at least one turnbuckle (14) is assigned to the rope-shaped tensioning element (5) for adjusting a tensile stress acting on the rope-shaped tensioning element (5).

9. Support system (3) according to one of claims 1 to 8,
wherein the support system (3) has at least one support device arranged between the first and second holding devices (6) with a support (15) extending at least substantially vertically, which is connected to the ground via a ground anchoring body (11), in particular in the form of a screw body.

10. Support system (3) according to one of claims 1 to 9,
wherein the at least one photovoltaic module (4) or photovoltaic panel is designed as a bifacial photovoltaic module (4) or photovoltaic panel.

11. Photovoltaic open space installation (1) with at least one support system (3) according to one of claims 1 to 10, wherein the support system (3) is mounted such that the at least one photovoltaic module (4) or photovoltaic panel is held in an east-west direction at least substantially perpendicular to the at least one rope-shaped tensioning element (5).

12. Photovoltaic open space installation (1) according to claim 11,
wherein a plurality of support systems (3) arranged at least substantially parallel to one another are provided.

13. Method for the construction of a photovoltaic open space installation (1) according to claim 11 or 12, wherein the method comprises the following steps:
- anchoring the first and second holding devices (6) of the support system (3) in the ground,
- tensioning the first and second rope-shaped tensioning elements (5) between the first and second holding devices (6) of the support system (3),
- wherein the first and second holding devices (6) are anchored relative to each other in such a way that the rope-shaped tensioning elements (5) then tensioned between the mounting devices run at least substantially in an east-west direction, and wherein
the method further comprises the following steps:
- inserting the at least one guide element (7) assigned to the at least one photovoltaic module (4) or photovoltaic panel into the first and second rope-shaped tensioning elements (5) serving as the guide system;
- positioning the at least one photovoltaic module (4) or photovoltaic panel along the rope-shaped tensioning elements (5); and
- fixing the guide element (7) of the positioned photovoltaic module (4) or photovoltaic panel to the rope-shaped tensioning elements (5).

## Revendications

1. Système de support (3) pour monter une installation photovoltaïque en plein air (1), qui présente au moins un module photovoltaïque (4) ou panneau photovoltaïque orienté à la verticale ou tout du moins sensiblement à la verticale, et de préférence une pluralité de modules photovoltaïques (4) ou panneaux photovoltaïques orientés à la verticale ou tout du moins sensiblement à la verticale, dans lequel le système de support (3) présente les éléments suivants :
- un premier élément de serrage supérieur en forme de câble (5) et un second élément de serrage inférieur en forme de câble (5) espacé devant celui-ci à la verticale ;
- un premier dispositif de retenue (6) et un second dispositif de retenue (6) espacé de celui-ci, dans lequel une première zone d'extrémité des deux éléments de serrage en forme de câble (5) est reliée au premier dispositif de retenue (6), et dans lequel une seconde zone d'extrémité, opposée à la première zone d'extrémité, des deux éléments de serrage en forme de câble (5) est reliée ou peut être reliée au second dispositif de retenue (6) ;
dans lequel le premier et le second élément de serrage en forme de câble (5) sont chacun réalisé sous la forme d'un système de guidage destiné à guider au moins un élément de guidage (7) associé audit au moins un module photovoltaïque (4) ou panneau photovoltaïque,
**caractérisé en ce que**
le premier dispositif de retenue (6) présente un étai (9) qui s'étend de manière inclinée d'au moins 5°, de préférence d'au moins 10° et de manière encore préférée d'environ 15° à 30° en éloignement du second dispositif de retenue (6), dans lequel le second dispositif de retenue (6) présente un étai (9) qui s'étend de manière inclinée d'au moins 5°, de préférence d'au moins 10° et de manière encore préférée d'environ 15° à 30° en éloignement du premier dispositif de retenue (6), dans lequel le premier et le second élément de serrage en forme de câble (5) s'étendent au moins en partie entre l'étai (9) du premier et du second dispositif de retenue (6).

2. Système de support (3) selon la revendication 1,
dans lequel ledit au moins un élément de guidage (7) du module photovoltaïque (4) ou panneau photovoltaïque est réalisé sous la forme d'une gaine ou d'un œillet qui sont agencés de préférence au niveau d'une zone d'arête latérale supérieure ou inférieure du module photovoltaïque (4) ou panneau photovoltaïque, et à travers lesquels l'un des éléments de serrage en forme de câble (5) peut être guidé ; et/ou
dans lequel ledit au moins un élément de guidage (7) du module photovoltaïque (4) ou panneau photovoltaïque est réalisé sous la forme d'un chariot de guidage qui est agencé de préférence au niveau d'une zone d'arête latérale supérieure ou inférieure du module photovoltaïque (4) ou panneau photovoltaïque, de façon à s'étendre sur ou au niveau de l'un des éléments de serrage en forme de câble (5).

3. Système de support (3) selon la revendication 1 ou 2,
dans lequel ledit au moins un élément de guidage (7) associé au module photovoltaïque (4) ou panneau photovoltaïque peut être fixé en fonction des besoins et en particulier de manière détachable au niveau de l'élément de serrage en forme de câble (5) de telle sorte qu'un déplacement relatif entre l'élément de guidage (7) avec le module photovoltaïque (4) ou panneau photovoltaïque associé et l'élément de serrage en forme de câble (5) est interrompu.

4. Système de support (3) selon l'une quelconque des revendications 1 à 3, dans lequel il est prévu au moins un élément de fixation (8), en particulier sous la forme d'une vis, en particulier d'une vis de serrage ou d'une vis de positionnement, pour fixer en fonction des besoins l'élément de guidage (7) au niveau de l'élément de serrage en forme de câble (5).

5. Système de support (3) selon l'une quelconque des revendications 1 à 4, dans lequel le premier dispositif de retenue (6) présente un support (10), conçu en particulier sous la forme d'une plaque de support, avec lequel une zone d'extrémité inférieure de l'étai (9) du premier dispositif de retenue (6) est reliée ou peut être relié en particulier par l'intermédiaire d'une pièce en angle ou d'une articulation ; et/ou
dans lequel le second dispositif de retenue (6) présente un support (10), conçu en particulier sous la forme d'une plaque de support, avec lequel une zone d'extrémité inférieure de l'étai (9) du second dispositif de retenue (6) est reliée ou peut être relié en particulier par l'intermédiaire d'une pièce en angle ou d'une articulation ; et/ou
dans lequel le premier dispositif de retenue (6) présente au moins un corps d'ancrage au sol (11), en particulier sous la forme d'un corps de vissage, destiné à ancrer le premier dispositif de retenue (6) dans un substrat ;
et/ou
dans lequel le second dispositif de retenue (6) présente au moins un corps d'ancrage au sol (11), en particulier sous la forme d'un corps de vissage, destiné à ancrer le second dispositif de retenue (6) dans un substrat.

6. Système de support (3) selon l'une quelconque des revendications 1 à 5, dans lequel le premier dispositif de retenue (6) présente une déviation (12) associée aux éléments de serrage en forme de câble (5), en particulier sous la forme d'une poulie de renvoi, par l'intermédiaire de laquelle l'élément de serrage en forme de câble (5) correspondant est dévié, et/ou
dans lequel le second dispositif de retenue (6) présente une déviation (12) associée aux éléments de serrage en forme de câble (5), en particulier sous la forme d'une poulie de renvoi, par l'intermédiaire de laquelle l'élément de serrage en forme de câble (5) correspondant est dévié.

7. Système de support (3) selon l'une quelconque des revendications 1 à 6, dans lequel chaque élément de serrage en forme de câble (5) présente un ancrage de câble (13) par l'intermédiaire duquel une zone d'extrémité de l'élément de serrage en forme de câble (5) peut être fixée sur ou dans le substrat, dans lequel l'ancrage de câble (13) présente de préférence un corps d'ancrage au sol (11) en particulier sous la forme d'un corps de vissage.

8. Système de support (3) selon l'une quelconque des revendications 1 à 7, dans lequel il est associé à l'élément de serrage en forme de câble (5) au moins un tendeur (14) pour régler un effort de traction agissant sur l'élément de serrage en forme de câble (5).

9. Système de support (3) selon l'une quelconque des revendications 1 à 8, dans lequel le système de support (3) présente au moins un dispositif d'étai agencé entre le premier et le second dispositif de retenue (6) comprenant un étai (15) s'étendant tout du moins sensiblement à la verticale, qui est relié au substrat par l'intermédiaire d'un corps d'ancrage au sol (11), en particulier sous la forme d'un corps de vissage.

10. Système de support (3) selon l'une quelconque des revendications 1 à 9, dans lequel ledit au moins un module photovoltaïque (4) ou panneau photovoltaïque est conçu sous la forme d'un module photovoltaïque (4) ou panneau photovoltaïque biface.

11. Installation photovoltaïque en plein air (1) comprenant au moins un système de support (3) selon l'une quelconque des revendications 1 à 10, dans lequel le système de support (3) est monté de telle sorte que ledit au moins un module photovoltaïque (4) ou panneau photovoltaïque est maintenu dans une direction est/ouest tout du moins sensiblement perpendiculairement audit au moins un élément de serrage en forme de câble (5).

12. Installation photovoltaïque en plein air (1) selon la revendication 11,
dans laquelle il est prévu une pluralité de systèmes de support (3) agencés tout du moins sensiblement en parallèle les uns aux autres.

13. Procédé de montage d'une installation photovoltaïque en plein air (1) selon la revendication 11 ou 12, dans lequel le procédé présente les étapes suivantes consistant à :
- ancrer le premier et le second dispositif de retenue (6) du système de support (3) dans le substrat ;
- serrer le premier et le second élément de serrage en forme de câble (5) entre le premier et le second dispositif de retenue (6) du système de support (3),
le premier et le second système de retenue (6) étant ancrés l'un par rapport à l'autre de telle sorte que les éléments de serrage en forme de câble (5) serrés alors entre les dispositifs de retenue s'étendent tout du moins sensiblement dans une direction est/ouest, et dans lequel le procédé présente en outre les étapes suivantes consistant à :
- introduire ledit au moins un élément de guidage (7) associé auxdits au moins un module photovoltaïque (4) ou panneau photovoltaïque dans le premier et le second élément de serrage en forme de câble (5) servant de système de guidage ;
- positionner ledit au moins un module photovoltaïque (4) ou panneau photovoltaïque le long des éléments de serrage en forme de câble (5) ; et
- fixer l'élément de guidage (7) du module photovoltaïque (4) ou panneau photovoltaïque positionné au niveau des éléments de serrage en forme de câble (5).
